(19) Europäisches Patentamt / European Patent Office / Office européen des brevets

(11) **EP 3 065 394 A1**

(12) **EUROPEAN PATENT APPLICATION**

(43) Date of publication:
**07.09.2016 Bulletin 2016/36**

(51) Int Cl.:
***H04N 5/232*** (2006.01)     ***H04N 13/00*** (2006.01)
***H04N 13/02*** (2006.01)

(21) Application number: **15305340.0**

(22) Date of filing: **05.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Boisson, Guillaume**
  **35576 CESSON-SÉVIGNÉ (FR)**
• **Seifi, Mozhdeh**
  **35576 CESSON-SÉVIGNÉ (FR)**
• **Vandame, Benoit**
  **35576 CESSON-SÉVIGNÉ (FR)**
• **Sabater, Neus**
  **35576 CESSON-SÉVIGNÉ (FR)**

(74) Representative: **Barr, Angela Louise**
**Technicolor**
**European Patent Operations**
**1-5 rue Jeanne d'Arc**
**92443 Issy-les-Moulineaux (FR)**

(54) **Light field metadata**

(57)    A method of providing metadata for captured light field data, the method comprising providing a data format aggregating metadata describing characteristics of at least one of: a light field camera used to capture the light field data, a matrix of views derived from the light field data, and a focal stack derived from the light field data:

**FIG. 4**

**Description**

TECHNICAL FIELD

The present invention relates to metadata for light field data and processing of light field data.

BACKGROUND

Conventional cameras capture light from a three-dimensional scene on a two-dimensional sensor device sensitive to visible light. Light sensitive technology used in such imaging devices is often based on semiconductor technology, capable of converting photons into electrons such as, for example, charge coupled devices (CCD) or complementary metal oxide technology (CMOS). A digital image photosensor, for example, typically includes an array of photosensitive cells, each cell being configured to capture incoming light. A 2D image providing spatial information is obtained from a measurement of the total amount of light captured by each photosensitive cell of the image sensor device. While the 2D image can provide information on the intensity of the light and the colour of the light at spatial points of the photosensor(s), no information is provided on the direction of the incoming light.

Light field cameras (also known as radiance capturing cameras) can provide directional information on incoming light rays in additional to 2D spatial information. The directional information may be obtained by the use of an array of micro-lenses, often referred to as a microlens array (MLA) associated with an image sensor. A light field array camera, for example, is provided with a microlens array and a photosensor. A plenoptic camera is provided with a main lens focusing light on a MLA, and a photosensor associated with the MLA. In other configuratios of light field cameras a plurality of cameras each provided with its own lens and sensor may be used to obtain light field data.

A light field is often defined as a 4D function characterizing the light from different directions at different points in a scene. The information on the directional distribution of the light rays is typically referred to as light field data or 4D data. Since the information provides 4 parameters - two dimensional positional information and two dimensional angular information the directional distribution corresponds to a four-dimensional (4D) function. The light field may be interpreted as a two dimensional collection of 2D images of a scene.

The light field data obtained can be processed for many applications, for example, to generate refocused images of the scene, to generate images from different viewpoints, to provide depth information on the captured scene or to generate 3D images.

Data obtained from a light field camera should be appropriately managed in order to be properly exploited in the different applications.

The present invention has been devised with the foregoing in mind.

SUMMARY OF INVENTION

According to a first aspect of the invention there is provided a method of providing metadata for captured light field data, the method comprising providing a data format aggregating metadata describing characteristics of at least one of: a light field camera used to capture the light field data, a matrix of views derived from the light field data, and a focal stack derived from the light field data.

In an embodiment the method includes obtaining light field data metadata describing characteristics of at least one of: a light field camera used to capture the light field data, a matrix of views derived from the light field data, and a focal stack derived from the light field data; and rendering the light field data based on the information provided by the metadata.

In an embodiment, the metadata is aggregated in a light image file.

In an embodiment, the metadata is defined in markup language in compliance with XML.

In an embodiment, the metadata describing characteristics of the light field camera used to capture the light field data includes data defining one or more of the following technical features of the light field camera:

    a photosensor of the light field camera;
    a main lens of the light field camera; and
    a micro lens array of the light field camera.

In an embodiment, the metadata describing the photosensor of the light field camera includes data representative of one or more of the following parameters:

    spatial resolution of the photosensor;
    colour sampling of a colour filter of the photosensor;

transmittance of the colour filter of the photosensor
dynamic range of the pixels of the photosensor;
color transform matrix defining the non-linear relationship between the signal output by a pixel and the incoming light;
the pitch between two adjacent pixels of the photosensor; and
scaling factor specifying the shape ratio of non-square pixels.

In an embodiment, the metadata describing the main lens of the light field camera includes data representative of one or more of the following parameters:

focal length of the main lens
the ratio between the pupil and the focal length; and
the vignetting model of the main lens.

In an embodiment, the metadata describing the micro lens array of the light field camera includes data representative of one or more of the following parameters:

pattern of the micro-lens array;
pattern of color filters arranged on the micro-lens array;
the pitch between two adjacent micro-lenses of the micro-lens array;
scaling factor specifying the shape ratio of micro lens; and
the number of calibrated microlens centres
the spatial coordinates of one or more microlens centres

In an embodiment, the metadata describing characteristics of a matrix of views derived from the light field data, includes data representative of one or more of the following parameters:

the number of views in the array;
the spatial resolution of a or each view;
colors available in a view;
the spatial coordinates of a reference point of a view;
the horizontal and vertical focal length of a view

In an embodiment, the metadata describing characteristics of a focal stack derived from the light field data, includes data representative of one or more of the following parameters:

the number of focused pictures in the focal stack;
the spatial resolution of the focused pictures
the distance of focalization of a focused picture

A second aspect of the invention provides a device for providing metadata for captured light field data, the device comprising:

a light field data acquisition module for acquiring light field data captured by a light field camera and
a data formatter for providing aggregating metadata describing characteristics of at least one of:

a light field camera used to capture the light field data,
a matrix of views derived from the light field data, and
a focal stack derived from the light field data.

A third aspect of the invention provides a light field imaging device comprising:

an array of micro lenses arranged in a regular lattice structure;
a photosensor configured to capture light projected on the photosensor from the array of micro lenses, the photosensor comprising sets of pixels, each set of pixels being optically associated with a respective micro lens of the array of micro lenses; and
a device for providing metadata for captured light field data, the device comprising:
a light field data acquisition module for acquiring light field data captured by a light field camera and
a data formatter for providing aggregating metadata describing characteristics of at least one of:

a light field camera used to capture the light field data,
a matrix of views derived from the light field data, and
a focal stack derived from the light field data.

A further aspect of the invention provides a device for rendering an image from light field data using metadata describing characteristics of at least one of:

a light field camera used to capture the light field data,
a matrix of views derived from the light field data, and
a focal stack derived from the light field data, the device comprising
a processor and memory containing a rendering application, the light field data and the metadata wherein the rendering application configures the processor to render the light field data based on information provided in the meta data.

Another aspect of the invention provides a data package comprising

light field data captured from a light field camera;
metadata describing characteristics of at least one of:
a light field camera used to capture the light field data,
a matrix of views derived from the light field data, and
a focal stack derived from the light field data.

According to another aspect of the invention there is provided a method of processing light field data, comprising converting light field data from a first light field data format into a second light field data format different to the first light field format, the conversion being performed using parameters obtained from metadata describing the light field data wherein the first light field data format and the second light field data format are selected from the group consisting of: raw light field data captured by a light field camera, a matrix of sub-aperture images, and a focal stack.

In an embodiment, the light-field metadata describes characteristics of at least one of: a light field camera used to capture the light field data, a matrix of sub-aperture images derived from the light field data, and a focal stack derived from the light field data.

In an embodiment, the first light field data format is raw light field data, captured by a light field camera, the raw light field data comprising an array of micro-images, each micro image being projected by a respective micro lens of a micro-lens array and the second light field format is a matrix of sub-aperture images, each sub-aperture image being generated from collocated samples of the micro-images and wherein at least one of the focal lengths and the interaxial baseline distance of the matrix of sub-aperture images is derived using technical parameters of the light field camera included in the metadata.

In an embodiment, focal lengths are derived from at least one of the focal length of the main lens of the light field camera, the horizontal and scaling factor of the photosensor of the light field camera, and the pixel pitch of the photosensor.

In an embodiment, the interaxial baseline is derived from at least one of the scaling factors of the photosensor of the light field camera, the pixel pitch of the photosensor, the pitch of the microlens array and the scaling factors of the micro lens array.

In an embodiment, wherein the extrinsic matrix of a sub-aperture image $V_{k,l}$ is composed of the following rotation R and translation T matrices :

$$R = \begin{pmatrix} 1 & 0 & 0 \\ 0 & 1 & 0 \\ 0 & 0 & 1 \end{pmatrix} \text{ and } T = \begin{pmatrix} k.b_x \\ l.b_y \\ 0 \end{pmatrix}$$

where $b_x$ and $b_y$ are the respective horizontal and vertical inter-axial baseline distances, and $k$ and $l$ are integers.

In an embodiment, the first light field data format is raw light field data, captured by a light field camera, the raw light field data comprising an array of micro-images, each micro image being projected by a respective micro lens of a micro-lens array and the second light field format is a focal stack, the focal stack being computed by splatting shifted micro images of the raw light field data, wherein the focalisation distance of the focused image is derived from at least one of the focal length of the main lens, the pixel pitch of the photosensor and the lens pitch of the microlens array.

In an embodiment, the focalisation distance is determined based on the expression:

$$z = \frac{w - p}{p} \times F$$

where w represents the shift defining a focused picture, F is the focal distance of the main lens and $p = \frac{r_{\mu L}}{r_p}$ is the number of pixels of the photosensor corresponding to the diameter of a micro-lens, $r_{\mu L}$ denoting the microlens pitch of the light field camera and $r_p$ denoting the photosensor pitch of the light field camera.

In an embodiment, the derived focalisation distance is included in the metadata.

In an embodiment, the first light field data format is a matrix of sub-aperture images and the second light field data format is a focal stack, the focal stack being computed by splatting shifted sub-aperture images, wherein the focalisation vergence is derived from at least one of the focal lengths and the inter-axial baseline distances of the matrix of sub-aperture images.

In an embodiment, the focalisation vergence v is determined by :

$$v = \frac{1}{z} = \frac{d}{b_x \cdot f_x} \text{ or } v = \frac{d}{b_y \cdot f_y}$$

where $b_x$ and $b_y$ are the inter-axial baseline distances, $f_x$ and $f_y$ are the focal lengths of the matrix of sub-aperture images and $d$ is the underlying disparity.

Yet another aspect of the invention provides a device for processing light field data, comprising a processor and a memory containing a format conversion application, wherein the format conversion application configures the processor to convert light field data from a first light field data format into a second light field data format different to the first light field format, the conversion being performed using parameters obtained from metadata describing the light field data wherein the first light field data format and the second light field data format are selected from the group consisting of: raw light field data captured by a light field camera, a matrix of sub-aperture images, and a focal stack.

In an embodiment, the memory further comprises a rendering application, wherein rendering application configures the processor to render the light field data based on information provided in metadata.

A further aspect of the invention provides a light field imaging device comprising: an array of micro lenses arranged in a regular lattice structure; a photosensor configured to capture light projected on the photosensor from the array of micro lenses, the photosensor comprising sets of pixels, each set of pixels being optically associated with a respective micro lens of the array of micro lenses; and a device for processing light field data, comprising a processor and a memory containing a format conversion application, wherein the format conversion application configures the processor to convert light field data from a first light field data format into a second light field data format different to the first light field format, the conversion being performed using parameters obtained from metadata describing the light field data wherein the first light field data format and the second light field data format are selected from the group consisting of: raw light field data captured by a light field camera, a matrix of sub-aperture images, and a focal stack.

A further aspect of the invention provides an electronic device comprising memory, one or more processors; and one or more modules stored in the memory and configured for execution by the one or more processors, the one or more modules including instructions for processing or formatting light field data in accordance with embodiments of the invention.

A further aspect of the invention provides a computer readable memory including instructions, that when executed by a processor of a portable device, cause the device to perform operatios comprising including instructions for processing or formatting light field data in accordance with embodiments of the invention.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1A is a schematic diagram of a light field camera according to a first embodiment of the invention;
FIG. 1B is a schematic diagram of a light field camera according to a second embodiment of the invention;
FIG. 2A is a functional diagram of a light field camera according to an embodiment of the invention;
Figure 2B is a functional diagram of a light field data formator and light field data processor according to an embodiment of the invention;
FIG. 3 is an example of a 2D light field image formed on a photosensor array;
FIG. 4 is an example of steps of formatting and processing of light field data according to an embodiment of the invention;
FIG. 5 and FIG 6 are screen shots illustrating examples of data files in accordance with embodiments of the invention.

DETAILED DESCRIPTION

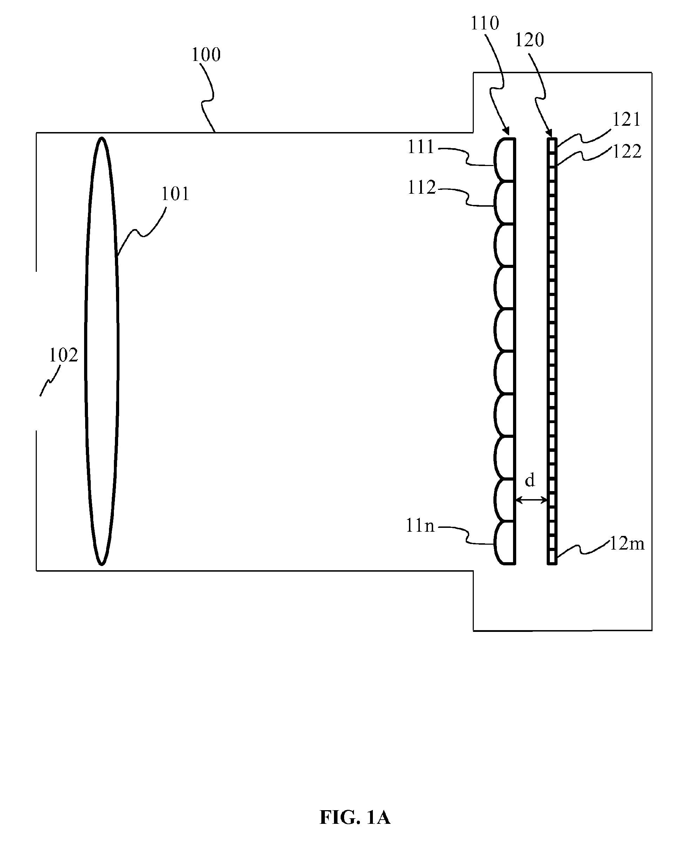

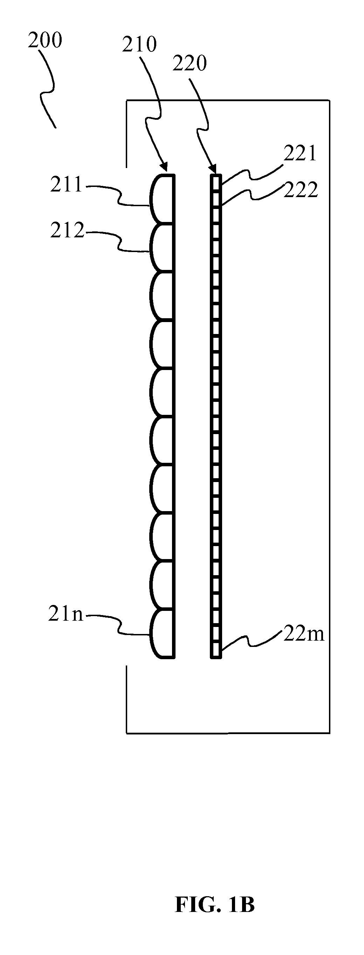

Light-field cameras are typically used to record a 4D light-field on a sensor composed of an array of pixels. The 4D light-field data provides 2-dimensional spatial information and 2-dimensional angular information on the incoming light. Such light-Field cameras may be for instance: a plenoptic camera 100 comprising a main lens 101, an array of lenses 110 and a photo sensor 120 as illustrated in Figure 1A; or a multi-camera array comprising an array of lenses 210 and a photosensor 220 without a main lens, as illustrated in Figure 1B. A multi-array camera may be considered as a particular case of a plenoptic camera where the mains lens has an infinite focal.

Embodiments of the invention provide formatting of light field data for further processing applications such as format conversion, refocusing, viewpoint change and 3D image generatio.

Figure 1A is a schematic diagram of a light field camera for which one or more embodiments of the invention may be applied.

The light field camera 100 of Figure 1A is a plenoptic type light field camera comprising a micro lens array 110 and an image sensor 120 associated with the micro lens array 110. Further optics may be provided such as an aperture 102 for enabling a selectable amount of light to enter into the light field camera. The lens arrangement further includes a main (objective) lens 101 for focusing light towards the micro lens array 110.

The micro lens array 110 is composed of an array of microlenses 111, 112, 113...11n arranged, in a regular lattice structure. For example, the structure may be a rectangular lattice of rows and columns. The micro lens array may also be referred to as a lenslet array. For purposes of illustratio, the microlens array 110 is shown with a relatively small number of microlenses, but it will be appreciated that the number of microlenses may reach up to several thousand or even several million microlenses.

Optionally, spacers might be placed around each micro lens of the micro-lens array 110 between the micro-lens array 110 and the image sensor 120 in order to prevent light from one micro lens from overlapping with light of other microlenses of the microlens array 110 at the image sensor 120.

The image sensor comprises a photosensor array 120 composed of a number m of photo sensors 121, 122, 123, 124.....12m arranged in a lattice structure. For example the structure may be a rectangular lattice of rows and columns.Each photosensor 121, 122, 123, 124.....12m corresponds to a pixel or a group of pixels of the raw image of the scene captured by the photosensor array 120, each pixel covering a part (also referred to as a point) of the scene. For purposes of illustratio, the photosensor array 120 is illustrated as having a relatively small number of photosensors 121 to 121m. It will be appreciated, however, that, the number of photosensors is not limited to that illustrated in Figure 1A but may be extended to any number of photosensors, for example several thousand or several million photosensors. As an illustrative example, an image of 12.4 megapixels may be provided by an array of 4088x3040 pixels/photosensors. The image sensor may be for example a charge coupled device (CCD).

The microlenses 111, 112, 11n of the micro lens array 110 are arranged such that each microlens is optically associated with photosensors of the photo sensor array 120. The photosensor array 120 is generally of finer pitch than the microlens array. Accordingly, each microlens is associated with a plurality of photosensors of the photosensor array 120. Optical association between a microlens and a group of photosensors signifies that the light rays passing through a given microlens reach at least one of the group of photosensors optically associated with the given microlens.

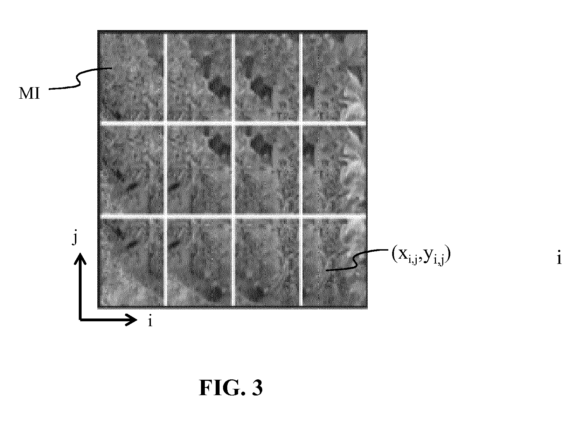

The interposition of the microlens array 110 between the main lens 101 and the photosensor 120 results in multiple images being formed on the photosensor array 120. Each microlens of the microlens array 110 projects a respective image, onto the associated photosensors of the photosensor array 120. Accordingly the raw image captured by the image sensor 120 is composed of an array of small images, as for example illustrated in Figure 3, typically referred to as micro-images. Each micro-image corresponds to a partial field of view from a respective different viewpoint. and corresponds to a micro-lens of the microlens array. Each pixel of photosensor 120 may be seen as corresponding to a 4D light field coordinate where two dimensions specify its spatial position on the sensor and two dimensions specify the angular or directional information of light that is incident upon that pixel according to the 2D position of the pixel within the microimage which it belongs to.

A color filter array (CFA) may in some cases be arranged on the microlens array 110 or on the photosensor array 120. The CFA typically arranges RGB (Red, Green and Blue) color filters on the photosensor or microlens array, the RGB arrangement taking, for example, the form of a Bayer filter mosaic. One color filter (red, green or blue filter) may be associated with an MLA according to a predetermined pattern, comprising 50 % green, 25 % red and 25 % blue in the example of a Bayer filter, such a pattern also being referred to as a RGBG, GRGB or RGGB pattern. It will be appreciated that, the arrangement of the color filters on the microlens array 110 or photosensor array 120 is not limited to a RGGB pattern. In other embodiments, the predetermined pattern may be a RGBE pattern with one of the green filters modified to 'Emerald' (for a block of four color filters); a CYYM pattern with one 'Cyan' filter, two 'Yellow' filters and one 'Magenta' filter (for a block of four color filters); a CYGM pattern with one 'Cyan' filter, one 'Yellow' filter, one 'Green' filter and one 'Magenta' filter; a RGBW pattern with one 'Red' filter, one 'Green' filter, one 'Blue' filter and one 'White' filter, several arrangement being possible (for example arranged on a block of four color filters with 'White' for the upper left filter, 'Red' for the upper right filter, 'Blue' for the lower left filter and 'Green' for the lower right filter; or arranged on a block of 4x4 color filters with 'White', 'Blue', 'White', 'Green' for the first line, 'Blue', 'White', 'Green', 'White' for the second line below the first line, 'White', 'Green', 'White', 'Red' for the third line below the second line and 'Green', 'White', 'Red', 'White' for the fourth line below the third line).

The gap between the microlens array and the photosensor array may be composed of air, of an optical material having an index n (for example a glass layer) or of multiple layers comprising at least one layer air layer and at least one optical material layer. Using a glass layer to form the gap has the advantages of keeping the microlens array 110 at a constant distance from the photosensor array 120 uniformly across the photosensor array 120 and of reducing this distance when needed. If d is the distance between the output of the microlens array 110 and the photosensor array 120 along a longitudinal axis, having a layer composed of an optical material with an index n (n > 1, for example n = 1.5) between the micro lens array 110 and the photosensor array 120 enables the distance to be set to d/n without modifying the distance d. By adapting/modifying the index of the optical material of the layer forming the gap, it is possible to adapt/modify a parameter representative of the distance between the microlens array 110 and the photosensor array 120 without modifying the distance d.

Figure 1B is a schematic diagram of a light field camera according to a second embodiment of the invention.

The light field camera 200 according to the second embodiment of the invention is a multi camera array type light field camera comprising a micro lens array 210 and an image sensor 220 associated with the micro lens array 210. In this embodiment a main lens 201 for focusing light towards the micro lens array 210 is not present. Elements such as the photosensor array 220 and micro lens array 210 operate in a similar manner to the corresponding elements of the plenoptic type camera of Figure 1A. The main difference is that the main lens is not present in the embodiment of Figure 1B. Each micro-image corresponds to a full field of view from a respective different viewpoint.

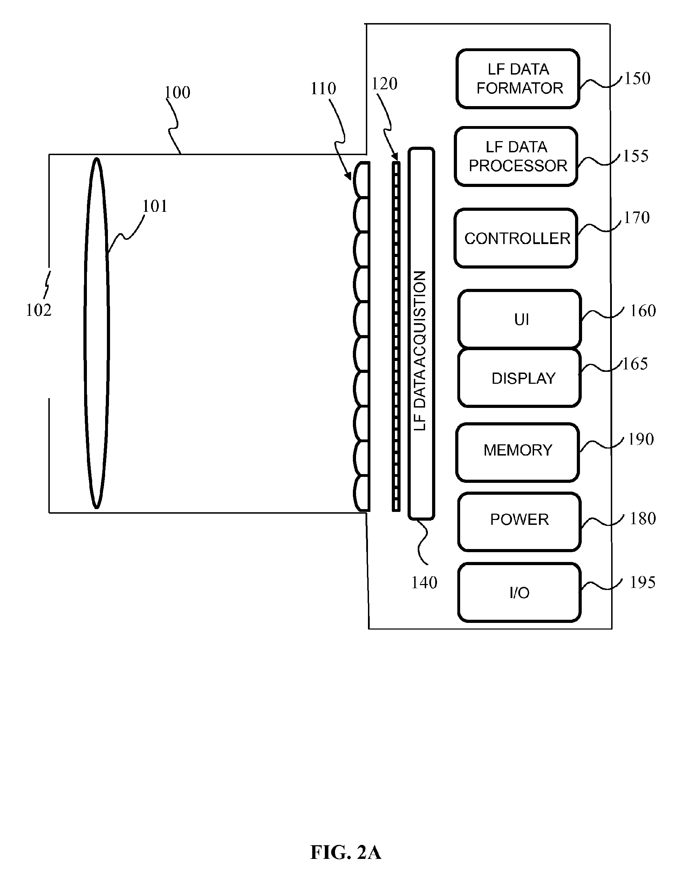

Figure 2A is a block diagram of a light field camera device in accordance with an embodiment of the invention.The light field camera comprises an aperture/shutter 102, a main (objective) lens 101, a micro lens array 110 and a photosensor array 120 in accordance with the light field camera of Figure 1A. In some embodiments the light field camera includes a shutter release that is activated to capture a light-field image of a subject or scene. It will be appreciated that the functional features may also be applied to the light field camera of Figure 1B.

The photosensor array 120 provides light field image data which is acquired by LF Data acquisition module 140 for formatting by a light field data formatting module 150 and/or processing by light field data processor 155. Light field data may be stored, after acquisition and after processing, in memory 190 in a raw data format, or as sub aperture images or focal stacks.

In the illustrated example, the light field data formatting module 150 and the light field data processor 155 are disposed in or integrated into the light field camera 100. In other embodiments of the invention the light field data formatting module 150 and/or the light field data processor 155 may be provided in a separate component external to the light field capture camera. The separate component may be local or remote with respect to the light field image capture device. It will be appreciated that any suitable wired or wireless protocol may be used for transmitting light field image data to the formatting module 150 or light field data processor 155; for example the light field data processor may transfer captured light field image data and/ or other data via the Internet, a cellular data network, a WiFi network, a BlueTooth communication protocol, and/ or any other suitable means.

The light field data formatting module 150 is configured to provide a data format, in accordance with embodiments of the invention, aggregating metadata describing characteristics of at least one of a light field camera used to capture the light field data, a matrix of views derived from the light field data, and a focal stack derived from the light field data.

The light field data formatting module 150 may be implemented in software, hardware or a combination thereof.

The light field data processor 155 configured to operate on raw light field image data received directly from the LF data acquisition module 140 for example to generate focal stacks or a matrix of views in accordance with embodiments of the invention. Output data, such as, for example, still images, 2D video streams, and the like of the captured scene may be generated. The light field data processor may be implemented in software, hardware or a combination thereof.

In at least one embodiment, the light field camera 100 may also include a user interface 160 for enabling a user to provide user input to control operatio of camera 100 by controller 170. Control of the camera may include one or more of control of optical parameters of the camera such as shutter speed, or in the case of an adjustable light field camera, control of the relative distance between the microlens array and the photosensor, or the relative distance between the objective lens and the microlens array. In some embodiments the relative distances between optical elements of the light field camera may be manually adjusted. Control of the camera may also include control of other light field data acquisition parameters, light field data formatting parameters or light field processing parameters of the camera. The user interface 160 may comprise any suitable user input device(s) such as a touchscreen, buttons, keyboard, pointing device, and/ or the like. In this way, input received by the user interface can be used to control and/ or configure the LF data formatting module 150 for controlling the data formatting, the LF data processor 155 for controlling the processing of the acquired light field data and controller 170 for controlling the light field camera 100.

The light field camera includes a power source 180, such as one or more replaceable or rechargeable batteries. The light field camera comprises memory 190 for storing captured light-field data and/or rendered final images or other data such as software for implementing methods of embodiments of the invention. The memory can include external and/ or internal memory. In at least one embodiment, the memory can be provided at a separate device and/ or location from camera 100. In one embodiment, the memory includes a removable/swappable storage device such as a memory stick.

The light field camera may also include a display unit 165 (e.g., an LCD screen) for viewing scenes in front of the camera prior to capture and/or for viewing previously captured and/or rendered images. The screen 165 may also be used to display one or more menus or other information to the user. The light field camera may further include one or more I/O interfaces 195, such as FireWire or Universal Serial Bus (USB) interfaces, or wired or wireless communication interfaces for data communication via the Internet, a cellular data network, a WiFi network, a BlueTooth communication protocol, and/ or any other suitable means. The I/O interface 195 may be used for transferring data, such as meta data formatted by LF data formatting module in accordance with embodiments of the invention and light field data such as raw light field data or data processed by LF data processor 155, to and from external devices such as computer systems or display units, for rendering applications.

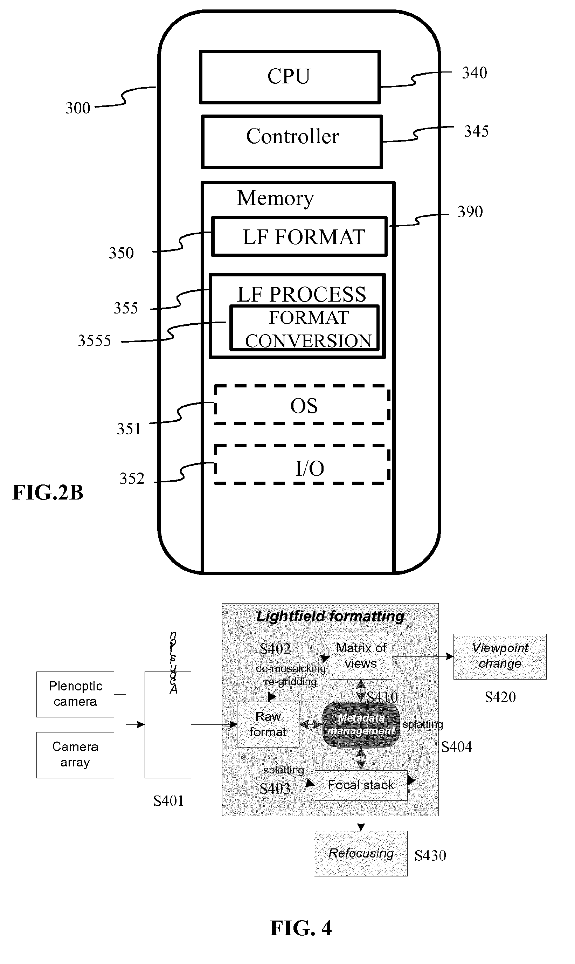

Figure 2B is a block diagram illustrating an embodiment of a potential implementation for of light field data formatting module and the light field data processor.

The circuit 300 includes memory 390, a memory controller 345 and processing circuitry 340 comprising one or more processing units (CPU(s)). The one or more processing units 340 are configured to run various software programs and/or sets of instructions stored in the memory 390 to perform various functions including light field data formatting and light field data processing. Software components stored in the memory include a data formatting module (or set of instructions) 350 for providing a data format aggregating light field metadata in accordance with embodiments of the invention and a light field data processing module (or set of instructions) 355 for processing light field data in accordance with embodiments of the invention, including a format conversion module 3555 (or set of instructions) for converting one format of light field data to another different format of light field data in accordance with embodiments of the invention. Other modules may be included in the memory for applications of the light field camera device such as an operating system module 351 for controlling general system tasks (e.g. power management, memory management) and for facilitating communication between the various hardware and software components of the device 300, and an interface module 352 for controlling and managing communication with other devices via I/O interface ports.

Figure 3 illustrates an example of a 2D image formed on the photosensor array 120 of Figure 1A or the photosensor array 220 of Figure 1B. The image is composed of an array of micro images MI, each micro image being produced by the respective micro lens ($i, j$) of the microlens array 110,210. The micro images are arranged in the array in a rectangular lattice structure defined by axes $i$ and $j$. A micro lens image is referenced by the respective micro lens coordinates ($i, j$). A pixel PI of the photosensor 120, 220 is referenced by its spatial coordinates ($x,y$). 4D data associated with a given pixel may be referenced as ($x, y, i, j$).

Embodiments of the invention provide a data format that aggregates metadata describing for raw light field data content, for matrices of views, and for focal stacks. In some embodiments the metadata may be used for processing light field data, for example for converting the light field data content from one format to another, e.g. from raw light field data into matrix of views or focal stacks; or from matrix of views into focal stacks; or for common light field applications such as viewpoint change and refocusing.

Figure 4 outlines steps of a method of processing and formatting light field data in accordance with one or more embodiments of the invention. In step S401 light field data is acquired by data acquisition module 140 from a plenoptic camera such as the camera shown in Figure 1A or a multi camera array such as the camera shown in Figure 1B. Lightfield data processor 155 receives the light field data in raw format. In step S402 the raw light field data is converted into a matrix of views (sub-aperture images) by a process of de-mosaicking and re-gridding. In step S403 the raw light field data is converted into a focal stack (set of images at different focal planes) by a process of splatting (accumulating shifted microimages). In step S404 the matrix of views is converted into a focal stack by a process of splatting (accumulating shifted sub-aperture images).

In step S410 metadata for the acquired light field data is provided and formatted. The metadata includes camera metadata defining technical characteristics of the camera, view matrix metadata defining the matrices of views and focal stack metadata defining the focal stacks; View point changes may be performed in step S420 using the matrix of views and light field meta data defining the matrix of views. Refocusing may be performed in step S430 using the focal stack and metadata defining the focal stack. A 2D image is generated from the micro-images by shifting the micro images by a given disparity and adding the images to form a single 2D image. In order to refocus the image at a given distance z, the micro-images are shifted by a disparity associated with the distance z. In order to perform a change of viewpoint only a part of the micro-images are added (e.g. left/right portions for left/right viewpoints)

In embodiments of the invention formatting syntax for metadata characterising the light field data content is provided. The metadata characterising the light field data content includes:

**Camera characteristic data:** characterising the sensor, the main lens and the μ-lens array of the light field camera capturing the light field data and in particular the positions of the centres of the μ-lens; The metadata may include data representative of sensor resolution, color sampling, color filter transmittance, dynamic range, color transform matrix, pixel pitch, lens pitch, focal length, vignetting, for example

**View characteristic data -** data characterising matrices of views such as metadata that characterizes the respective intrinsic & extrinsic parameters of each view/sub-aperture image; and color information of each view/sub-aperture image;

**Focal stack data** Data characterising focal stacks such as metadata that characterizes the focalization distance of each focused picture; for example an index map.

The formatting syntax may also include basic information needed to recover file location and file names for the management of video and sequence of frames.

The metadata may be provided as digital data stored in a file or a set of files. In one embodiment of the invention the formatting syntax is presented as a markup language complying for example with XML rules. In what follows the formatting syntax is referred to as *light field markup language* (abbreviated to *lfml*). In the example that follows the formatting syntax for the metadata includes the definition of *sections* (enclosed with *tags*) and of the corresponding *attributes* (the metadata itself).

**Root section and type attribute**

Table 1 illustrates an example of a root section and attribute of a light field metadata file. The body of an *.lfml file is enclosed in a **<LightFieldContent>** section. It contains an attribute specifying the type of content, denoted in the example as **LFtype="RAW"** indicates raw plenoptic picture, indicates **"MATRIX_OF_VIEWS"** for arrays of views, and **"FOCAL_STACK"** for focal stacks.

**Table 1: Root section and attribute of an exemplary *.lfml file**

```
<LightFieldContent
lfml:LFtype="RAW"
>
    [...]
</LightFieldContent>
```

**Folder and file attributes**

File naming attributes can be found at the root level if every file is stored and named consistently. File naming attributes can also be found in lower-level sections if some files do not share the same path or prefix or numbering. The **path** attribute is a string specifying the folder path.

The **filePrefix** attribute is a string specifying the prefix of filenames. The **storageMode** attribute is a two-part string separated by a colon that describes the file storage mode, and the file format used. It may either of the following: **"FILE_SEQUENCE:PNG"** ; **"FILE_SEQUENCE:PGM"** ; **"FILE_SEQUENCE:RAW"** ; **"VIDEO_FILE:YUV";** **"VIDEO_FILE:AVI".**

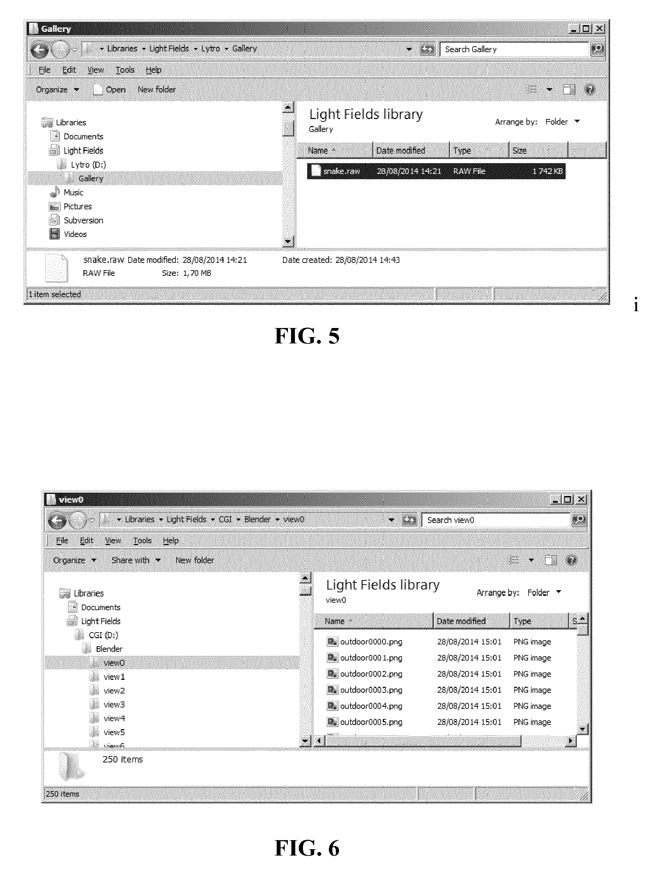

The **firstFrameIdx** and **lastFrameIdx** attributes are indices of the first and the last frame of the light field sequence respectively. The **digitSuffix** attribute is a string, for example of hash symbols, specifying the number of digits dedicated to frame numbering in the filename suffix. In the case of still-imaging, these three fields may be missing or empty (see Table 2 and Figure 5). In the case of sequence of images, filenames are suffixed with the index of the frames (see Figure 3 and Figure 6).

```
<LightFieldContent
lfml:LFtype="RAW"
lfml:path=".\Lytro\Gallery"
lfml:filePrefix="Snake"
lfml:storageMode="FILE_SEQUENCE:RAW"
lfml:firstFrameIdx=""
lfml:lastFrameIdx=""
lfml:digitSuffix=""
>
[...]
</LightFieldContent>
```

**Table 2: File naming attributes for a raw light field still image**

```
<LightFieldContent
    lfml:LFtype="MATRIX_OF_VIEWS"
    lfml:path=".\CGI\Blender"
    lfml:filePrefix="outdoor"
    lfml:storageMode="FILE_SEQUENCE:PNG"
    lfml:firstFrameIdx="0"
    lfml:lastFrameIdx="244"
```

**Table 3: File naming attributes for light field video (here a CGI multi-view video sequence)**

```
    lfml:digitSuffix="####"
>
[...]
</LightFieldContent>
```

It may be noted that in the case of matrices of views and focal stacks, files may be fetched by default in folders named for instance respectively \view# and \focus# (see for example Figure 6). Filenames may also be built by default following the prefix and suffix rules predefined. However the attributes path, folder, filename and suffix can be used in subsections in order to specify alternative locations and names.

**Coordinate system attributes**

Dealing with light field imaging requires coordinate system conventions. The coordinate system may be implicit with default values being pre-determined, or explicitly stated in the description file with the attributes CSx and CSy, which can respectively have the following values: "leftward"/"rightward" and "upward"/"downward".

Coordinate systems attributes can be located at any level of the *.lfml file, up to the root level provided that all the coordinate systems used are consistent with each other.

**Raw plenoptic pictures**

In the case of raw plenoptic pictures **(LFtype="RAW"),** a lightfield metadata file(*.lfml file) present a section **<RawPlenopticPictures>,** that may include one or more of the following sections, depending on the completeness of the calibratio: **<Sensor>, <MainLens>** and <µLensArray> (see Table 4).

The **<Sensor>** section may contain one or more of the following attributes describing technical features of the light field camera. Such attributes may be provided by the manufacturer:

The **raysResolution** attribute specifies the resolution of the sensor **("WidthxHeight",** e.g. **"4008x2672"** for the Raytrix R11 camera, **"3280x3280"** for the first Lytro *'LightField'* camera, etc.).

The **colorFilter** attribute specifies the color sampling on the sensor (e.g. **"BayerGRBG"** or **"Foveonx3RGB"** or **"Monochrome").**

The **colorFilterTransmittance** attribute specifies the transmittance of the color filters of the sensor. It has one or three or four values, depending on the color filter. This attribute may be missing or empty.

The **dynamicRange** attribute specifies the range of the pixels. It has two values, the lower and upper bounds beyond which the signal can be considered as noise.

The **colorTransformMatrix** is a $3{\times}3$ matrix that specifies the non-linear relationship between the signal output by a pixel and the incoming light.

The **pixelPitch** attribute specifies the distance between two adjacent pixels, in meters.

The **scaleFactorX** and **scaleFactorY** attributes can be used to specify the shape ratio of rectangular (not square) pixels.

The **<MainLens>** section contains one or more of the following attributes, that may be provided by the manufacturer:

The **focalLength** attribute specifies the focal length of the main lens, in meters.

The **numericalAperture** attribute specifies the ratio between the pupil and the focal length. That attribute may be missing or empty.

The **whiteImage** attribute specifies a folder location from where to retrieve white images that correspond to the actual focal length. White images are used to remove the effect of vignetting. That attribute may be missing or empty.

The **vignetting** attribute specifies a model for main lens vignetting. That attribute may be missing or empty.

The **<µLensArray>** section contains the following attributes. Some may be provided by the manufacturer and some may be determined by further calibratio.

The **pattern** attribute specifies the pattern of the µ-lens array **("Square",** or **"HexagonalRowMajor",** or **"HexagonalColumnMajor").**

If applicable, a **colorArrangement** attribute specifies the pattern of color filters arranged on the µ-lens array. That attribute may be missing or empty.

The **µLensPitch** attribute specifies the distance between two adjacent µ-lens, in meters.

The **µLensArrayRotation** attribute specifies the rotation angle (in degrees) of the µ-lens array with respect to the sensor grid, in the coordinate system defined.

The **scaleFactorX** and **scaleFactorY** attributes can be used to specify the shape ratio of µ-lenses.

The **nbµCentersCalibrated** attribute specifies the numbers of centers of micro-images (µ-centers) (i.e. the number of centers of µ-image) calibrated. It can be equal to zero.

The **<µLensArray>** section contains the corresponding number of **<µCenter>** subsections (see Table 5), that contain the following attributes:

The **µCenterId** attribute is the index of the µ-center.

The **cx** and **cy** attributes respectively specify the x- and y-coordinates (in pixels) of the µ-center.

**Table 4: An example of *.lfml file for a raw light field picture**

```
<LightFieldContent
    lfml:LFtype="RAW"
    lfml:path=".\Lytro\Gallery"
    lfml:filePrefix="Snake"
    lfml:storageMode="FILE_SEQUENCE:RAW"
```

(continued)

```
lfml:firstFrameIdx=""
lfml:lastFrameIdx=""
lfml:digitSuffix=""
```

```
    lfml:CSx="rightward"
    lfml:CSy="downward"
>

    <RawPlenopticPictures>
        <Sensor
            lfml:raysResolution="3280x3280"
            lfml:colorFilter="BayerGRBG"
            lfml:colorFilterTransmittance=""
            lfml:dynamicRange=""
            lfml:colorTransformMatrix=""
            lfml:pixelPitch="0.00000139999976158141876680929"
            lfml:scaleFactorX="1.0"
            lfml:scaleFactorY="1.0"
        ></Sensor>
        <MainLens
            lfml:focalLength="0.05131999969482421875"
            lfml:numericalAperture="1.9"
            lfml:whiteImage=""
            lfml:vignetting=""
        ></MainLens>
        <µLensArray
            lfml:pattern="HexagonalRowMajor"
            lfml:µLensPitch="0.0000138986148834228506793158"
            lfml:µLensArrayRotation="-0.0025792161468416452407836914 06"
            lfml:scaleFactorX="1.0"
            lfml:scaleFactorY="1.00024712085723876953125"
            lfml:nbµCentersCalibrated="0"
        >
        </µLensArray>
    </RawPlenopticPictures>
</LightFieldContent>
```

**Table 5: An example of µ-center subsection**

```
LightFieldContent
    lfml:LFtype="RAW"
    [...]

>
    <RawPlenopticPictures>
        [...]
        <µLensArray
            [...]
            lfml:nbµCentersCalibrated="108900"
        >
            [...]
            <µCenter
                lfml:µCenterId="27224"
```

(continued)

```
                lfml:cx="1633.087277"
                lfml:cy="1633.490847"
            ></μCenter>
            [...]
        </μLensArray>
    </RawPlenopticPictures>
</LightFieldContent>
```

**Matrices of views**

In the case of matrices (or arrays) of views **(LFtype="MATRIX_OF_VIEWS"),** *.lfml files present a section **<MatrixOfViews>,** that encloses several **<SubApertureImage>** subsections. The syntax suits both a set of sub-aperture images reconstructed from raw plenoptic material (see Table 6) and the content acquired from a camera array (see Table 7).

The **<MatrixOfViews>** section contains the following attributes:

The **nbSubApertureImages** specifies the number of views/sub-aperture images. The **<MatrixOfViews>** section contains the corresponding number of **<SubApertureImage>** subsections.

The **pixelResolution** attribute specifies the resolution of views/sub-aperture images in pixels **("WidthxHeight"),** assuming that it is the same for all views. If not, this attribute is filled in every subsequent **<SubApertureImage>** subsection. That attribute may be missing or empty if available in the headers of corresponding picture files.

The **<SubApertureImage>** subsections contain the following attributes:

The **subAplmId** attribute is the index of the view / sub-aperture image.

The **extrinsics** attribute specifies the extrinsic matrix of the view/sub-aperture image in the coordinate system defined.

The color attribute specifies the color(s) available in the view/sub-aperture image (**"R", "G", "B", "RGB", "L"**). This attribute can be filled in the **<MatrixOfViews>** section if shared by every view/sub-aperture image.

The **cx** and **cy** attributes respectively specify the x- and y-coordinates (in pixels) of the principal point. These attributes may be missing or empty. They can also be filled in the **<MatrixOfViews>** section if shared by every view/sub-aperture image.

The **fx** and **fy** attributes respectively specify the horizontal and vertical focal length (in pixels) of the view/sub-aperture view. These attributes may be missing or empty. They can also be filled in the **<MatrixOfViews>** section if shared by every view/sub-aperture image.

The **numericalAperture** attribute specifies the ratio between the pupil and the focal length, like in the **<MainLens>** section. That attribute may be missing or empty. It can also be filled in the **<MatrixOfViews>** section if shared by every view/sub-aperture image.

The **distortionCoefficients** attribute specifies a distortion model (for example, Bouguet's 5-parameter model of radial and tangential distortions). That attribute may be missing or empty. It can also be filled in the **<MatrixOfViews>** section if shared by every view/sub-aperture image.

**Table 6: An example of an excerpt of *.lfml file describing the matrix of views reconstructed from a Pelican Imaging camera device**

```
<LightFieldContent
    lfml:LFtype="MATRIX_OF_VIEWS"
    lfml:path=".\PelicanImaging\Gallery"

    lfml:filePrefix="GoldenGate"
    lfml:storageMode="FILE_SEQUENCE:PGM"
    lfml:firstFrameIdx=""
    lfml:lastFrameIdx=""
```

(continued)

```
        lfml:digitSuffix=""
        lfml:CSx="rightward"
        lfml:CSy="downward"
>
    <MatrixOfViews
        lfml:nbSubApertureImages="16"
        lfml:pixelResolution="1000x750"
    >
        <SubApertureImage
            lfml:subApImId="0"
            lfml:extrinsics="[[1, 0, 0, 0], [0, 1, 0, 0], [0, 0, 1, 0], [0, 0, 0, 1]]"
            lfml:color="G"
            lfml:cx="499"
            lfml:cy="374"
            lfml:fx=" 1175.0"
            lfml:fy="1175.0"
            lfml:numericalAperture=""
            lfml:distortionCoefficients=""
        ></SubApertureImage>
        <SubApertureImage
            lfml:subApImId="1"
            lfml:extrinsics="[[1, 0, 0, 0.005], [0, 1, 0, 0], [0, 0, 1, 0], [0, 0, 0, 1]]"
            lfml:color="R"
            lfml:cx="500"
            lfml:cy="374"
            lfml:fx="1175.4"
            lfml:fy="1175.4"
            lfml:numericalAperture=""
            lfml:distortionCoefficients=""
        ></SubApertureImage>
        <SubApertureImage
            lfml:subApImId="2"
            lfml:extrinsics="[[1, 0, 0, 0.01], [0, 1, 0, 0], [0, 0, 1, 0], [0, 0, 0, 1]]"
            lfml:color="G"
            lfml:cx="499"
            lfml:cy="375"
            lfml:fx="1175.9"
            lfml:fy="1175.9"
            lfml:numericalAperture=""
            lfml:distortionCoefficients=""
        ></SubApertureImage>
        <SubApertureImage
            lfml:subApImId="3"
            lfml:extrinsics="[[1, 0, 0, 0.015], [0, 1, 0, 0], [0, 0, 1, 0], [0, 0, 0, 1]]"
            lfml:color="B"
            lfml:cx="500"
            lfml:cy="375"
            lfml:fx="1175.0"
            lfml:fy="1175.0"
            lfml:numericalAperture=""
```

(continued)

```
        lfml:distortionCoefficients=""
    ></SubApertureImage>
        [...]
    </MatrixOfViews>
</LightFieldContent>
```

**Table 7: An excerpt of *.lfml file describing a computer-generated matrix of views.**

```
<LightFieldContent
    lfml:LFtype="MATRIX_OF_VIEWS"
    lfml:path=".\CGI\Blender"
    lfml:filePrefix="outdoor"
    lfml:storageMode="FILE_SEQUENCE:PNG"
    lfml:firstFrameIdx="0"
    lfml:lastFrameIdx="249"
    lfml:digitSuffix="####"
    lfml:CSx="rightward"
    lfml:CSy="downward"
>
    <MatrixOfViews
        lfml:nbSubApertureImages="121"
        lfml:pixelResolution="1920x1080"
        lfml:color="RGB"
        lfml:cx="960"
        lfml:cy="540"
        lfml:fx="3026.218853"
        lfml:fy="3026.218853"
        lfml:numericalAperture="0."
    >
        <SubApertureImage
            lfml:subApImId="0"
            lfml:extrinsics="[[1, 0, 0, 0], [0, 1, 0, 0], [0, 0, 1, 0], [0, 0, 0, 1]]"
            lfml:distortionCoefficients=""
        ></SubApertureImage>
        <SubApertureImage
            lfml:subApImId="1"
            lfml:extrinsics="[[1, 0, 0, 0.1], [0, 1, 0, 0], [0, 0, 1, 0], [0, 0, 0, 1]]"
            lfml:distortionCoefficients=""
        ></SubApertureImage>
        [...]
        <SubApertureImage
            lfml:subApImId="249"
            lfml:extrinsics="[[1, 0, 0, 1.0], [0, 1, 0, 1.0], [0, 0, 1, 0], [0, 0, 0, 1]]"
            lfml:distortionCoefficients=""
        ></SubApertureImage>
    </MatrixOfViews>
</LightFieldContent>
```

**Focal stacks**

In the case of focal stacks **(LFtype="FOCAL_STACK"),** *.lfml files present a section **<FocalStack>,** that encloses several **<FocalStack>** subsections and optionally a subsection **<IndexMap>** (see **Erreur ! Source du renvoi introuvable.** 8).

The **<FocalStack>** section contains the following attributes:

The **nbFocusedPictures** specifies the number of focused pictures in the stack. The **<FocalStack>** section contains the corresponding number of **<FocusedPicture>** subsections.

The **focusedPicIdxMap** attribute specifies whether an index map is available or not **("AVAILABLE"** or **"UNAVAILABLE").**

As in the case of matrices of views, the **pixelResolution** attribute specifies the resolution of the focused pictures in pixels **("WidthxHeight"),** assuming that it is the same for everyone. If not, this attribute is filled in every subsequent **<FocusedPicture>** subsection. That attribute may be missing or empty if available in the headers of corresponding picture files.

The **<FocusedPicture>** subsections contain the following attributes:

The **focusPicId** attribute is the index of the focus picture.

The **distance** attribute specifies the distance of focalization of the focused picture, in meters. That attribute may be missing or empty.

The **vergence** attribute specifies the inverse of the distance of focalization of the focused picture (in $m^{-1}$). That attribute may be missing or empty.

The **<IndexMap>** subsection contain the attributes needed to retrieve the corresponding file (**filename or suffix,** optionally **path** or **folder**).

**Table 8: An example of *.lfml file for a focal stack**

```
<LightFieldContent
    1fml:LFtype="FOCAL_STACK"
    lfml:path=".\Lytro\Gallery"
    lfml:filePrefix="Snake"
    lfml:storageMode="FILE_SEQUENCE:PNG"
    lfml:firstFrameIdx=""
    lfml:lastFrameIdx=""
    lfml:digitSuffix=""
    lfml:CSx="rightward"
    lfml:CSy="downward"
>
    <FocalStack
        lfml:nbFocusedPictures="8"
        lfml:focusedPicIdxMap="AVAILABLE"
        lfml:pixelResolution="1000x1000"
    >
        <FocusedPicture
            lfml:focusPicId="0"
            lfml:distance=""
            lfml:vergence=""
        ></FocusedPicture>
        <FocusedPicture
            lfml:focusPicId="1"
            lfml:distance =""
```

(continued)

```
                    lfml:vergence=""
                ></FocusedPicture>
                <FocusedPicture
                    lfml:focusPicId="2"
                    lfml:distance =""
                    lfml:vergence=""
                ></FocusedPicture>
                <FocusedPicture
                    lfml:focusPicId="3"
                    lfml:distance =""
                    lfml:vergence=""
                ></FocusedPicture>
                <FocusedPicture
                    lfml:focusPicId="4"
                    lfml:distance =""
                    lfml:vergence=""
                ></FocusedPicture>
                <FocusedPicture
                    lfml:focusPicId="5"
                    lfml:distance =""
                    lfml:vergence=""
                ></FocusedPicture>
                <FocusedPicture
                    lfml:focusPicId="6"
                    lfml:distance =""
                    lfml:vergence=""
                ></FocusedPicture>
                <FocusedPicture
                    lfml:focusPicId="7"
                    lfml:distance =""
                    lfml:vergence=""
                ></FocusedPicture>
                <IndexMap
                    lfml:suffix="indexMap"
                ></IndexMap>
            </FocalStack>
        </LightFieldContent>
```

The metadata may be used for processing light field data, for example converting the light field data content from one format to another, e.g. from raw light field data into matrix of views or focal stacks; or from matrix of views into focal stacks; and for common light field applications such as viewpoint change and refocusing. Examples of processing performed, in accordance with embodiments of the invention, on the LF field data by the light field data processor will now be described.

## Format conversion

### From raw plenoptic content to matrices of views

Arrays of views (micro images) can be reconstructed by de-mosaicking and re-gridding raw light field data acquired from the light field camera.

$(R_{i,j})$ denotes a set of micro-images in the raw light field picture. A sub-aperture image $V_{k,l}$ is composed of collocated samples from each $\mu$-image: $V_{k,l}[i,j] = R_{i,j}[k,l]$

The focal lengths (in pixels) of the corresponding array of views, i.e. the horizontal focal length **fx** and the vertical focal **fy** attributes of the metadata describing the matrix of views, are given by:

$$\begin{cases} f_x = \dfrac{F}{s_x . r_p} \\ f_y = \dfrac{F}{s_y . r_p} \end{cases}$$

where

- *F* denotes the focal length of the main lens, in meters (i.e. the value of the attribute **focalLength** of the section **<MainLens>**);
- $s_x$ and $s_y$ respectively denote horizontal and vertical scaling factors of the sensor (i.e. the values of the attributes **scaleFactorX** and **scaleFactorY** of the section **<Sensor>**);
- and $r_p$ denotes the pixel pitch, in meters (i.e. the value of the attribute **pixelPitch** of the section **<Sensor>**).

And the underlying inter-axial baseline distances are given by:

$$\begin{cases} b_x = \dfrac{s_x . s_y . r_p^{\,2}}{\sigma_x . r_{\mu L}} \\ b_y = \dfrac{s_x . s_y . r_p^{\,2}}{\sigma_y . r_{\mu L}} \end{cases}$$

where

- $r_{\mu L}$ denotes the $\mu$-lens pitch, in meters (i.e. the value of the attribute **$\mu$LensPitch**);
- $\sigma_x$ and $\sigma_y$ respectively denote horizontal and vertical scaling factors of the $\mu$-lens array (i.e. the values of the attributes **scaleFactorX** and **scaleFactorY** of the section **<$\mu$LensArray>**).

The extrinsic matrix of the view $V_{k,l}$ (that corresponds to the **extrinsics** attribute of the section **<SubAperture-Image>**) is therefore made of the following rotation and translation matrices:

$$R = \begin{pmatrix} 1 & 0 & 0 \\ 0 & 1 & 0 \\ 0 & 0 & 1 \end{pmatrix} \text{ and } T = \begin{pmatrix} k . b_x \\ l . b_y \\ 0 \end{pmatrix}$$

assuming that the optical center of view $V_{0,0}$ is chosen as the origin of the coordinate system.

**From raw plenoptic content to focal stacks**

Focal stacks can be computed by accumulating ("*splatting*") shifted $\mu$-images.

*w* denotes the shift defining a focused picture. Considering the contribution of a $\mu$-image $R_{i,j}$, for each of its pixel $\begin{pmatrix} x \\ y \end{pmatrix}$, new coordinates in the focal stack are given by:

$$\begin{cases} X = u . x - u . w . i \\ Y = u . y - u . w . j \end{cases}$$

where

- $\begin{pmatrix} x \\ y \end{pmatrix}$ is expressed in the whole raw image coordinate system;

- and u is a zooming factor.

The underlying focalization distance (in meters), i.e. the **distance** attribute of the section **<FocusedPicture>,** is given by:

$$z = \frac{w - p}{p} \times F$$

where $p = \dfrac{r_{\mu L}}{r_p}$ is the number of pixels corresponding to the diameter of a $\mu$-lens.

The **vergence** attribute is then its inverse.

**From Matrices of views to focal stacks**

Focal stacks can also be computed by accumulating (*"spatting"*) shifted views, provided that they are registered.

The same formula can be used, considering this time the collection of sub-aperture images ($V_{k,l}$):

$$\begin{cases} X = u.i - u.d.k \\ Y = u.j - u.d.l \end{cases}$$

where $\begin{pmatrix} i \\ j \end{pmatrix}$ is expressed in the coordinate system of each view.

The underlying focalization vergence (in $m^{-1}$), i.e. the **vergence** attribute of the section **<FocusedPicture>,** is given indifferently by:

$$v = \frac{1}{z} = \frac{d}{b_x . f_x}$$

or

The corresponding **distance** attribute is the inverse of vergence v.

The proposed format of metadata describing light field data also suits common applications of light field data, such as viewpoint change and refocusing.

3D effects can be achieved by changing the viewpoint. This is obtained by view interpolation within the matrix of views.

Refocusing is a common application for focal stacks. The purpose involves stressing the depth of field, in which case the user picks one or several areas of the picture that he wants to be in focus (the remaining objects of the scene being as blurred as they are far from the focalized depth plane(s)). Another purpose consists in delivering all-in-focus pictures. In both ways, index maps are locally retrieved in order to fetch samples in one focalized picture of the focal stack.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A method of providing metadata for captured light field data, the method comprising providing a data format aggregating metadata describing characteristics of at least one of:

   a light field camera used to capture the light field data,
   a matrix of views derived from the light field data, and
   a focal stack derived from the light field data.

2. A method for rendering an image from light field data, the method comprising obtaining light field data metadata describing characteristics of at least one of:

   a light field camera used to capture the light field data,
   a matrix of views derived from the light field data, and
   a focal stack derived from the light field data; and
   rendering the light field data based on the information provided by the metadata

3. A method according to claim 1 or 2, wherein the metadata is aggregated in a light image file

4. A method according to any preceding claim, wherein the metadata is defined in markup language in compliance with XML.

5. A method according to any preceding claim, wherein the metadata describing characteristics of the light field camera used to capture the light field data includes data defining one or more of the following technical features of the light field camera:

   a photosensor of the light field camera;
   a main lens of the light field camera; and
   a micro lens array of the light field camera.

6. A method according to claim 5, wherein the metadata describing the photosensor of the light field camera includes data representative of one or more of the following parameters:

   spatial resolution of the photosensor;
   colour sampling of a colour filter of the photosensor;
   transmittance of the colour filter of the photosensor
   dynamic range of the pixels of the photosensor;
   color transform matrix defining the non-linear relationship between the signal output by a pixel and the incoming light;
   the pitch between two adjacent pixels of the photosensor; and
   a scaling factor specifying the shape ratio of non-square pixels.

7. A method according to claim 5 or 6 wherein the metadata describing the main lens of the light field camera includes data representative of one or more of the following parameters:

   focal length of the main lens
   the ratio between the pupil and the focal length; and
   the vignetting model of the main lens.

8. A method according to any one of claims 5 to 7, wherein the metadata describing the micro lens array of the light field camera includes data representative of one or more of the following parameters:

   a pattern of the micro-lens array;
   a pattern of color filters arranged on the micro-lens array;
   the pitch between two adjacent micro-lenses of the micro-lens array;
   a scaling factor specifying the shape ratio of micro lens; and
   the number of calibrated microlens centres; and
   spatial coordinates of one or more microlens centres

9. A method according to any preceding claim wherein the metadata describing characteristics of an array of views derived from the light field data, includes data representative of one or more of the following parameters:

the number of views in the array;
the spatial resolution of a or each view;
colors available in a view;
the spatial coordinates of a reference point of a view;
the horizontal and vertical focal length of a view

10. A method according to any preceding claim wherein the metadata describing characteristics of a focal stack derived from the light field data, includes data representative of one or more of the following parameters:

the number of focused pictures in the focal stack;
the spatial resolution of the focused pictures
the distance of focalization of a focused picture

11. A device for providing metadata for captured light field data,
the device comprising
a light field data acquisition module for acquiring light field data captured by a light field camera and
a data formatter for providing aggregating metadata describing characteristics of at least one of:

a light field camera used to capture the light field data,
a matrix of views derived from the light field data, and
a focal stack derived from the light field data.

12. A light field imaging device comprising:

an array of micro lenses arranged in a regular lattice structure;
a photosensor configured to capture light projected on the photosensor from the array of micro lenses, the photosensor comprising sets of pixels, each set of pixels being optically associated with a respective micro lens of the array of micro lenses; and
a device for providing metadata in accordance with claim 11.

13. A device for rendering an image from light field data using metadata describing characteristics of at least one of:

a light field camera used to capture the light field data,
a matrix of views derived from the light field data, and
a focal stack derived from the light field data, the device comprising
a processor and memory containing a rendering application, the light field data and the metadata wherein the rendering application configures the processor to render the light field data based on information provided in the meta data.

14. A data package comprising
light field data captured from a light field camera; and
metadata describing characteristics of at least one of:

a light field camera used to capture the light field data,
a matrix of views derived from the light field data, and
a focal stack derived from the light field data.

15. A computer program product for a programmable apparatus, the computer program product comprising a sequence of instructions for implementing a method according to any one of claims 1 to 10 when loaded into and executed by the programmable apparatus.

**FIG. 1A**

**FIG. 1B**

**FIG. 2A**

**FIG.2B**

300

CPU — 340

Controller — 345

Memory

LF FORMAT — 390

350

LF PROCESS

355

FORMAT CONVERSION

3555

OS

351

I/O

352

---

**Lightfield formatting**

Plenoptic camera

Camera array

S401

S402
de-mosaicking
re-gridding

Matrix of views

Viewpoint change

S420

S410

Raw format

Metadata management

splatting

S404

splatting

S403

Focal stack

Refocusing   S430

**FIG. 4**

MI

j

$(x_{i,j}, y_{i,j})$

i

i

**FIG. 3**

**FIG. 5**

**FIG. 6**

Europäisches
Patentamt

European
Patent Office

Office européen
des brevets

# EUROPEAN SEARCH REPORT

Application Number

EP 15 30 5340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/077880 A1 (VENKATARAMAN KARTIK [US] ET AL) 28 March 2013 (2013-03-28) | 1-3, 11-15 | INV. H04N5/232 H04N13/00 H04N13/02 |
| Y | * paragraphs [0009], [0011], [0065], [0098]; figure 13 * | 4 | |
| | ----- | | |
| Y | TESIC J: "METADATA PRACTICES FOR CONSUMER PHOTOS", IEEE MULTIMEDIA, IEEE SERVICE CENTER, NEW YORK, NY, US, vol. 12, no. 3, 1 July 2005 (2005-07-01), pages 86-92, XP011137101, ISSN: 1070-986X, DOI: 10.1109/MMUL.2005.50 * page 91, column 2, paragraph third * | 4 | |
| | ----- | | |

TECHNICAL FIELDS
SEARCHED (IPC)

H04N
G06T

~~The present search report has been drawn up for all claims~~

| Place of search | Date of completion of the search | Examiner |
|---|---|---|
| The Hague | 13 August 2015 | Daribo, Ismael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..............................................................................

& : member of the same patent family, corresponding
document

EPO FORM 1503 03.82 (P04C01)

Europäisches
Patentamt

European
Patent Office

Office européen
des brevets

Application Number

EP 15 30 5340

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 11-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 30 5340

The Search Division considers that the present European patent application does not comply with the requirements of unity of invention and relates to several inventions or groups of inventions, namely:

1. claims: 1-4, 11-15

   a method of providing metadata for captured light field data, wherein the metadata is defined in markup language in compliance with XML

   ---

2. claims: 5-8

   a method of providing metadata for captured light field data, wherein the metadata includes data defining characteristics of the light field camera's photosensor used to capture the light field data

   ---

3. claim: 9

   a method of providing metadata for captured light field data, wherein the metadata includes data representative of parameters of an array of views derived from the light field data

   ---

4. claim: 10

   a method of providing metadata for captured light field data, wherein the metadata includes data representative of parameters of a focal stack derived from the light field data

   ---

**EP 3 065 394 A1**

## ANNEX TO THE EUROPEAN SEARCH REPORT
## ON EUROPEAN PATENT APPLICATION NO.

EP 15 30 5340

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2015

| Patent document cited in search report | Publication date | Patent family member(s) | Publication date |
|---|---|---|---|
| US 2013077880 A1 | 28-03-2013 | CN 104081414 A | 01-10-2014 |
| | | EP 2761534 A1 | 06-08-2014 |
| | | JP 2014535191 A | 25-12-2014 |
| | | KR 20140067156 A | 03-06-2014 |
| | | US 2013077880 A1 | 28-03-2013 |
| | | US 2013077882 A1 | 28-03-2013 |
| | | US 2013315494 A1 | 28-11-2013 |
| | | US 2014369612 A1 | 18-12-2014 |
| | | US 2014369615 A1 | 18-12-2014 |
| | | US 2014376825 A1 | 25-12-2014 |
| | | US 2014376826 A1 | 25-12-2014 |
| | | US 2015003752 A1 | 01-01-2015 |
| | | US 2015003753 A1 | 01-01-2015 |
| | | US 2015015669 A1 | 15-01-2015 |
| | | US 2015055884 A1 | 26-02-2015 |
| | | US 2015199793 A1 | 16-07-2015 |
| | | US 2015199794 A1 | 16-07-2015 |
| | | US 2015199841 A1 | 16-07-2015 |
| | | WO 2013049699 A1 | 04-04-2013 |

EPO FORM P0459

For more details about this annex : see Official Journal of the European Patent Office, No. 12/82